(19) Europäisches Patentamt / European Patent Office / Office européen des brevets

(11) **EP 2 791 903 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(21) Anmeldenummer: **11805777.7**

(22) Anmeldetag: **16.12.2011**

(51) Int Cl.:
**G06T 7/00** *(2006.01)* **G06T 7/20** *(2006.01)*

(86) Internationale Anmeldenummer:
**PCT/EP2011/006388**

(87) Internationale Veröffentlichungsnummer:
**WO 2013/087084 (20.06.2013 Gazette 2013/25)**

(54) **VERFAHREN UND VORRICHTUNG ZUR SCHÄTZUNG EINER POSE**

METHOD AND DEVICE FOR ESTIMATING A POSE

PROCÉDÉ ET DISPOSITIF D'ESTIMATION D'UNE POSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.10.2014 Patentblatt 2014/43**

(73) Patentinhaber:
• **Universität zu Lübeck**
  **23538 Lübeck (DE)**
  Benannte Vertragsstaaten:
  **DE ES FR GB IT**
• **gestigon GmbH**
  **23562 Lübeck (DE)**
  Benannte Vertragsstaaten:
  **AL AT BE BG CH CY CZ DK EE FI GR HR HU IE IS LI LT LU LV MC MK MT NL NO PL PT RO RS SE SI SK SM TR**

(72) Erfinder:
• **MARTINETZ, Thomas**
  **23564 Lübeck (DE)**
• **EHLERS, Kristian**
  **23564 Lübeck (DE)**
• **TIMM, Fabian**
  **71229 Leonberg (DE)**
• **BARTH, Erhardt**
  **23626 Ovendorf (DE)**
• **KLEMENT, Sascha**
  **23564 Lübeck (DE)**

(74) Vertreter: **Hermann, Felix**
  **Boehmert & Boehmert**
  **Anwaltspartnerschaft mbB**
  **Patentanwälte Rechtsanwälte**
  **Pettenkoferstrasse 20-22**
  **80336 München (DE)**

(56) Entgegenhaltungen:
**WO-A1-2010/130245     US-A- 5 715 166**

• **SIMON D A ET AL: "Real-time 3-D pose estimation using a high-speed range sensor", ROBOTICS AND AUTOMATION, 1994. PROCEEDINGS., 1994 IEEE INTERNATIONAL C ONFERENCE ON SAN DIEGO, CA, USA 8-13 MAY 1994, LOS ALAMITOS, CA, USA,IEEE COMPUT. SOC, 8. Mai 1994 (1994-05-08), Seiten 2235-2241, XP010097371, DOI: 10.1109/ROBOT.1994.350953 ISBN: 978-0-8186-5330-8**
• **TURK G ET AL: "Zippered polygon meshes from range images", COMPUTER GRAPHICS PROCEEDINGS. ANNUAL CONFERENCE SERIES.SIGGRAPH, XX, XX, 1. Januar 1994 (1994-01-01), Seiten 311-318, XP002349385, DOI: 10.1145/192161.192241**

**Beschreibung**

**GEBIET DER ERFINDUNG**

Die Erfindung betrifft ein Verfahren und eine Vorrichtung zur echtzeitfähigen Analyse einer Sequenz elektronischer Bilder zur Schätzung der Positionen und Orientierungen eines in der Bildsequenz erfassten, beweglichen Objekts, d.h. die Schätzung der Pose des beweglichen Objekts. Ferner betrifft die Erfindung auch die Implementierung der Erfindung in Software und in diesem Zusammenhang auf ein computer-lesbares Medium, das Befehle speichert, deren Ausführung die Durchführung des erfindungsgemäßen Verfahrens bewirken.

**TECHNISCHER HINTERGRUND**

Die Schätzung menschlicher Posen durch einen Rechner bildet die Grundlage einer gestengesteuerten Mensch-Maschinen-Interaktion. Körper- oder Handgesten werden durch Kameras erfasst, die erfassten digitalen Bilder werden im Rechner verarbeitet und als Befehle interpretiert, die der Rechner oder ein von ihm angesteuertes Gerät schließlich ausführt. Der menschliche Nutzer bedarf keines separaten Eingabegerätes mehr, wenn er die befehlsgebenden Gesten beherrscht.

Besonders interessante Anwendungsgebiete der Gestensteuerung sind zum einen der Bereich medizinischer Eingriffe, bei denen der operierende Arzt direkt Hilfsgeräte (z.B. bildgebende Einrichtungen wie Ultraschall oder MRT) steuern möchte, aber zur Wahrung der Sterilität seiner Hände keine Steuereinrichtungen berühren kann, und zum anderen der Bereich öffentlicher Infoterminals oder Fahrkartenautomaten, die heute noch mit den durchaus unhygienischen Touchpads ausgestattet sind. Ein weiteres Anwendungsgebiet, das bereits kommerziell erschlossen worden ist, ist der Computerspielsektor.

Der Zweck eines Gestensteuerungsverfahrens ist darin zu sehen, dem optischen Abbild eines Menschen eine maschinen-interpretierbare Bedeutung zu geben. Dazu bedarf es einer Vorrichtung, die den Menschen elektronisch auswertbar abbildet, diese Abbildung hinsichtlich ihres Informationsgehaltes verdichtet und schließlich das verdichtete Abbild des Menschen in eine maschinen-interpretierbare Ausgabe übersetzt. Die Ausgabe der Vorrichtung kann aus Steuerbefehlen für nachgeschaltete, zu steuernde Vorrichtungen bestehen. Sie kann aber auch allein die verdichtete Abbildinformation umfassen, die einer nachgeschalteten Einheit zur Interpretation dieser Information zugeführt wird.

Ein Beispiel für eine verdichtete Abbildinformation ist beispielsweise die kontinuierliche Ausgabe der Lagekoordinaten der rechten Hand des Menschen in einem 3D-Koordinatensystem. Dabei reicht es oftmals aus, nur Koordinaten eines einzelnen Punktes für die Handposition auszugeben, z.B. wenn der gesamte Körper des Menschen abgebildet wird. Wird der Mensch in seiner Bewegung durch eine Bildsequenz abgebildet, so liefert die vorgenannte Vorrichtung beispielsweise die 3D-Koordinaten vorbestimmter Körperteile, die sich mit der Zeit - während der Bewegung - ändern. Die Koordinaten können als variable Eingaben in ein Programm dienen, das z.B. eine Cursorposition auf einem Bildschirm danach steuert.

Bei der Bildsegmentierung werden alle aufgezeichneten Bilddaten (Messwerte) entfernt, die nicht dem abgebildeten Menschen zuzuordnen werden können, also insbesondere Bildelemente, die den Hintergrund betreffen. Solche Bildelemente sind aus der weiteren Auswertung zu entfernen.

Die Bildsegmentierung ist mit zweidimensionalen Daten vor allem dann schwierig, wenn der Nutzer vor einem komplexen Hintergrund abgebildet wird - beispielsweise bewegen sich weitere Personen im Hintergrund - oder wenn er Gesten vollführt, bei denen er Extremitäten auf die Kamera so zubewegt, dass sie Teile seines Torsos verdecken. Da eine Gestensteuerung in Echtzeit stattfinden und eine Posenschätzung üblicherweise mit einer Videobildrate von 25 Hz oder mehr möglich sein soll, ist es erforderlich, dass die Bildsegmentierung binnen einiger Millisekunden erfolgen kann. Hierfür können Tiefensensorkameras eingesetzt werden, die nicht nur wie gewöhnliche Kameras ein Helligkeitsbild, sondern zusätzlich den Abstand der Kamera zum Objekt messen können.

Eine bekannte Tiefensensorkamera wird als Time-of-Flight (TOF)-Kamera bezeichnet. Sie sendet Infrarotlicht aus, dessen Intensität sinusförmig moduliert wird. In jedem Pixel wird die Phasenverschiebung zwischen dem ausgesandten und dem vom Objekt reflektierten Licht gemessen. Aus dieser Phasenverschiebung lässt sich die Laufzeit ("Time of Flight") des Lichts und damit der Abstand der Kamera zum Objektpunkt berechnen. Eine TOF Kamera liefert eine Tiefenkarte, die mit einem Helligkeitsbild (in der TOF-Nomenklatur oft als Amplitudenbild bezeichnet) registriert ist.

Eine weitere Methode zur gleichzeitigen Gewinnung von Bild- und Abstandsmesswerten basiert auf strukturiertem Licht, das auf das zu messende Objekt eingestrahlt und von diesem reflektiert wird. Eine Kamera detektiert das reflektierte Licht - gewöhnlich unter einem anderen als dem Einstrahlwinkel - und registriert die Änderung der Struktur eines projizierten Musters infolge der Lage bzw. Ausdehnung der reflektierenden Objektfläche. Beispielsweise kann aus der Krümmung einer von der Kamera detektierten reflektierten Linie, die ursprünglich als eine Gerade auf das Objekt projiziert worden ist, eine Wölbung der reflektierenden Fläche errechnet, mithin also eine Abstandsvariable gegenüber Projektor und/oder Kamera gemessen werden. In ähnlicher Weise eignet sich ein räumlich divergierendes Strahlenbündel, das Punkte in eine dreidimensionale Szene projiziert, durch Erfassen der Punktreflexionen und Ermitteln der Abstände zwischen diesen. Auf einer dem Projektor näher gelegenen Fläche sind die Punktabstände geringer als auf einer Fläche im Bildhintergrund. Dies wird zur Messung des Abstandes von Flächen oder Flächenbereichen zum Projektor verwendet.

Eine Tiefensensorkamera ist hiernach eine Vorrichtung, die neben einem zweidimensionalen Helligkeitsbild auch eine Abstandsinformation für jeden abgebildeten Objektpunkt liefert, so dass zusätzlich die Lage aller abgebildeten Objektpunkte entlang einer Tiefenachse - die gewöhnlich mit der optischen Achse der Kamera zusammenfällt - gemessen wird. Das mit einer Tiefensensorkamera aufgezeichnete elektronische Bild mit Abstandsinformation wird auch als zweieinhalbdimensionales (2½ D) Bild der Szene bezeichnet. Die vorgenannten Vorrichtungen sind nur Beispiele, wie 2½ D-Bilder erzeugt werden können, und stellen nicht notwendig eine abschließende Aufzählung dar.

David Simon et al., "Real-time 3-D Pose Estimation Using a High-Speed Range Sensor", Proceedings of the IEEE International Conference on Robotics and Automation, 1994, beschreibt ein System zur 3-D Posen-Erkennung eines beliebig geformten festen Körpers mit einer Rate von bis zu 10 Hz. Ein dreikantiges Netz-Modell des zu verfolgenden Objekts wird offline mit konventionellen Wegsensoren erzeugt. Echtzeit-Daten des Objekts werden mit einem CMU hochgeschwindigkeits VLSI Wegsensor erfasst. Die Posen-Erkennung wird mittels der Abbildung der Echtzeit-Wegdaten auf das dreikantige Netz-Modell mittels des Iterative Closest Point (ICP) Algorithmus, der 1992 von Besl und McKay vorgeschlagen wurde, erreicht.

Greg Turk et al., "Zippered polygon meshes from range images", Proceedings of the 21st annual conference on Computer graphics and interactive techniques, 1994, beschreibt ein Verfahren zur Kombination einer Ansammlung von Tiefenbildern in einem einzelnen Polygonnetz, dass den von außen erkennbaren Teil eines Objekts vollständig beschreibt. Das Verfahren umfasst die Schritte: 1) Ausrichten der Netze mittels eines iterativen ICP Algorithmus, 2) Zusammenführen benachbarter Netze, um eine durchgängige Oberfläche zu bilden, die die Oberfläche des Objekts korrekt wiedergibt, und 3) berechnen lokal gewichteter Durchschnittswerte des Oberflächenpositionen auf allen Netzen um eine übereinstimmende Oberflächengeometrie zu erhalten. Laut den Autoren des Aufsatzes unterscheidet sich das Verfahren von bekannten Verfahren in seiner inkrementellen Arbeitsweise.

US 5,715,166 bezieht sich auf eine Vorrichtung zum Erkennen von Oberflächen. Die Vorrichtung ermittelt die Datenpunkte einer Oberfläche und speichert ein mathematisches Modell der Modelloberfläche. Ein Mikrocontroller erfasst das mathematische Modell und die Datenpunkte durch (i) Bestimmen einer Datenpunktmenge die verschiedene Punkte der erfassten Datenpunkte enthält, (ii) Auffinden einer Menge nächstliegender Punkte, die für jeden Punkt der Datenpunktmenge einen nächstliegenden Punkt auf dem ersten mathematischen Modell umfasst, (iii) Erfassen der Datenpunktmenge und der Menge nächstliegender Punkte um eine erfasste Punktmenge zu erhalten, (iv) Berechnen der mittleren quadratischen Distanz der Punkte der erfassten Punktmenge und der Menge der nächstliegenden Punkte, (v) Vergleichen der mittleren quadratischen Distanz mit einem vorgegebenen Schwellenwert und (vi) wenn die mittlere quadratische Distanz den Schwellenwert überschreitet, (vi.i) Neudefinieren der Datenpunktmenge als die erfasste Punktmenge und (vi.ii) wiederholen der Schritte (ii), (iii), (iv) und (v).

Aus der Druckschrift WO 2010/130245 A1 ist u. a. zu entnehmen, wie die Bildsegmentierung von 2½ D-Bildern sachgerecht erfolgen kann. Die Bildsegmentierung ordnet die von den Kamerapixeln erfassten Helligkeitswerte nach den zugleich gemessenen und mit den Pixeln registrierten Abstandswerten. Nur Helligkeitswerte des Vordergrundes verbleiben in der weiteren Auswertung, wobei davon ausgegangen wird, dass der zu beobachtende Mensch zwecks bester Sichtbarkeit der Kamera am nächsten steht. Die Helligkeitswerte des Vordergrundes ergeben sich somit durch die Abbildung der Körperoberfläche des Menschen. Mittels der an sich bekannten Kameraprojektionsparameter kann den abgebildeten Objektpunkten sodann je ein Satz von 3D-Koordinaten zugeschrieben werden. Man erhält dann eine Liste mit 3D-Koordinaten, die alle für die Kamera direkt sichtbaren Punkte des Menschen umfasst. Innerhalb dieser "Wolke" aus Punkten im 3D-Raum befindet sich die tatsächliche Person, und innerhalb dieser 3D-Punktwolke liegen auch die interessierenden Koordinaten der vorbestimmten Körperteile, die man zum Zwecke einer Gestensteuerung ermitteln will.

Der zweite Teilschritt der Informationsverdichtung ist also darin zu sehen, aus der durch Bildsegmentierung bestimmten, den Menschen repräsentierenden 3D-Punktwolke einen reduzierten Satz von Punktkoordinaten zu ermitteln, der die Gesamtpose des Menschen möglichst gut beschreibt und zur Maschinen-Interpretation geeignet ist. Dieser Schritt wird auch als Posenschätzung bezeichnet. Ein Ziel der Posenschätzung ist dabei die Robustheit des reduzierten Datensatzes, d.h. geringe Änderungen der menschlichen Pose sollen auch nur zu kleinen Änderungen in den die Pose beschreibenden Datensätzen führen. Insbesondere sollen sich die die menschlichen Körperteile beschreibenden Koordinaten nach Möglichkeit auf zeitlich kontinuierlich verlaufenden Trajektorien bewegen, so dass jederzeit eine eindeutige Zuordnung der Koordinaten auf diese Körperteile gegeben ist.

Eine bekannte und generell akzeptierte Herangehensweise ist die Definition eines Skelettmodells des Menschen, das in die 3D-Punktwolke möglichst schnell eingepasst werden soll.

Aus der WO 2010/130245 A1 geht ein Verfahren zur echtzeitfähigen Posenschätzung aus Sequenzen von 2½ D-Bildern hervor, bei dem ein Skelettmodell vorgeschlagen wird, das als eine Topologie von Knoten und Kanten erklärt ist. Die Kanten, die als Paare von Knoten beschreibbar sind, kodieren eine Nachbarschaftsstruktur zwischen den Knoten. Das Einpassen der Knoten in die zuvor bestimmte Punktwolke erfolgt durch das Anwenden einer Lernregel zum Trainieren eine Selbstorganisierenden Karte ("self-organizing map", SOM).

Im Ausführungsbeispiel der WO 2010/130245 A1 wird der menschliche Oberkörper mit einer Topologie aus 44 Knoten und 61 Kanten modelliert. Die den Menschen repräsentierende 3D-Punktwolke umfasst ca. 6500 Datenpunkte (dargestellt im realen 3D-Raum, in dem der betrachtete Mensch unabhängig von seinem Abstand zur Kamera eine definierte Größe hat), von denen etwa 10 % für das Trainieren einer SOM verwendet werden. Die Gesamtheit der Knoten der Topologie kann direkt als eine SOM angesehen werden, während die Vorgabe der Kanten als eine spezielle Anforderung bzw. Einschränkung an die Lernregel aufgefasst werden kann.

Die Topologie wird für jedes Einzelbild einer Videosequenz separat trainiert, wobei das Trainingsresultat eines Einzelbildes zugleich der Initialisierung des Trainings des nachfolgenden Einzelbildes der Sequenz dient. Bei der Initialisierung des ersten Einzelbildes einer Sequenz wird die Größe der Topologie vorzugsweise durch eine einmalige Skalierung an die Größe des Menschen vor der Kamera angepasst, und ihr Schwerpunkt wird in den Schwerpunkt der 3D-Punktwolke verschoben. Ist die Größe der Topologie einmal korrekt gewählt, braucht sie während des laufenden Verfahrens nicht weiter angepasst zu werden, weil das Verfahren skaleninvariant arbeitet. Das Trainieren der Einzelbilder erfolgt durch Anwenden einer pattern-by-pattern Lernregel mit den folgenden Schritten:

a. Zufälliges Auswählen eines Datenpunktes X der 3D-Punktwolke;
b. Bestimmen jenes Knotens der Topologie, der den minimalen Abstand zu X aufweist;
c. Bestimmen aller Nachbarknoten des unter b. bestimmten Knotens gemäß der Kantenvorgabe der Topologie;
d. Verschieben der unter b. und c. bestimmten Knoten in Richtung auf X zu (vgl. dazu die Gleichungen (2) und (3) der WO 2010/130245 A1), wobei
e. die Verschiebungsvektoren mit Lernraten multipliziert werden, die für die unter c. bestimmten Knoten genau halb so groß sind wie für den unter b. bestimmten Knoten (s. dazu WO 2010/130245 A1, S. 13, Abs. 4);
f. Wiederholen der Schritte a. bis e. für eine vorgegebene Anzahl von Lernschritten unter schrittweisem Verringern der Lernraten.

Die Vorgabe einer maximalen Anzahl von Lernschritten für jedes Einzelbild ist zweckmäßig, um die Posenschätzung - d.h. hier das Einpassen des Skelettmodells in die 3D-Punktwolke und das Auslesen aller interessierenden Knotenpositionen - innerhalb einer vorgegebenen Zeitspanne auszuführen. Auf diese Weise können Bildsequenzen auch mit Videobildrate oder höher analysiert werden.

Wenngleich der Algorithmus der WO 2010/130245 A1 die Aufgabe der Echtzeit-Posenschätzung gut erfüllt, weist er doch noch einige Schwächen auf, die z.T. in der Druckschrift selbst genannt sind. Insbesondere bei der Analyse von Szenen, in denen der Mensch seine Arme vor dem Körper zusammenführt oder kreuzt, kann es durch die Lernregel zu - im Zuge weiterer Iterationen korrigierbaren - Fehlinterpretationen kommen, wenn einzelne Knoten weit von ihren eigentlichen Nachbarn in der Topologie weggezogen werden. Diesem Effekt wird in der WO 2010/130245 A1 mit einem Ankerpunkt im Modelltorso begegnet und einer Nebenbedingung der Lernregel, die Knotenverschiebungen vom Ankerpunkt weg jenseits eines vorbestimmten Schwellenwertes unterbindet.

Weiterhin zeigen sich bei der Lehre der WO 2010/130245 A1 auch Schwierigkeiten bei der genauen Positionsbestimmung der menschlichen Gelenke, der Schultern und Hüften, die jeweils durch mehrere verschiedene Knoten repräsentiert werden können. Das in der WO 2010/130245 A1 skizzierte Skelettmodell weist relativ viele Knoten auf, deren Anzahl sich aber nicht ohne Weiteres auf 20 oder weniger verringern lässt, ohne erhebliche Fehler in der Posenschätzung in Kauf zu nehmen. Derzeit am Markt erhältliche Systeme zur Gestensteuerung mittels Tiefensensorkameras arbeiten bereits mit eher nach der menschlichen Anatomie ausgelegten Skelettmodellen mit 15-20 Knoten. Durch eine Verringerung der Knotenanzahl ist auch eine höhere Verarbeitungsgeschwindigkeit der Kamerabilder zu erzielen.

Anatomisch motivierte Skelettmodelle sind überdies geeignet, zur Erfassung schnell ablaufender und komplexer Bewegungen (z.B. das Schwingen eines Golfschlägers) auf gespeicherte Bewegungsmuster (Schablonen) zurückzugreifen. In diesen Fällen sucht die Gestensteuerungssoftware nach der wahrscheinlichsten Übereinstimmung der erkannten Posenänderung mit einem vorab gespeicherten Bewegungsablauf und nutzt diese bekannte Schablone zur tatsächlichen Steuerung. Bei Computerspielen findet diese Technik bereits Anwendung, doch sie ist ressourcenintensiv. Nicht zuletzt verursacht das Erstellen der gespeicherten Bewegungsdaten bereits erhebliche Kosten.

Die Gestensteuerung mittels SOM-Training hingegen verzichtet völlig auf Schablonen und setzt vielmehr allein auf die echtzeitfähige Erfassbarkeit der Bewegungskontinuität. Sie hat das Potenzial, aufgrund effizient umsetzbarer Lernregeln auch schnelle menschliche Bewegungen zuverlässig zu erkennen, und bewahrt dabei zugleich die universelle Einsetzbarkeit, so dass sich ein ggf. aufwendiges Anpassen der Software an die Messaufgabe erübrigt.

## ZUSAMMENFASSUNG DER ERFINDUNG

Es ist daher die Aufgabe der Erfindung, die digitale Bildinformation der Kameraaufnahme eines Objekts insbesondere zur Posenschätzung so zu verdichten, dass eine Ermittlung der Pose des Objekts, insbesondere einer menschlichen Pose, in Echtzeit mit weniger Rechenaufwand und damit schneller und/oder genauer zu gestalten ist.

Die Aufgabe wird durch den Gegenstand der unabhängigen Patentansprüche gelöst. Vorteilhafte Ausführungsformen der Erfindung sind Gegenstand der abhängigen Patentansprüche.

Ein Aspekt der Erfindung ist somit die Informationsverdichtung, die für gewöhnlich in zwei Teilschritten erfolgt: Bildsegmentierung und Posenschätzung. In diesem Kontext bezieht sich die Erfindung insbesondere auf eine Verbesserung der Posenschätzung. Erfindungsgemäß wird eine Posenschätzung mittels SOM-Training vorgeschlagen, die in der Lage ist, mit einem der Anatomie des beobachteten Objekts nachempfundenen und in der Zahl der Knoten verringerten Skelettmodell zu arbeiten, wobei jeder Modellknoten zuverlässig durchgehend einer vorbestimmten Körperpartie zugeordnet werden kann. Die Anatomie des Objekts, dessen Pose erkannt werden soll, wird dabei als Skelettmodell modelliert.

Ein Skelettmodell, welches durch nur eine geringe Anzahl von Punkten (im Folgenden Knoten) im 3D-Raum beschrieben ist, stellt eine gute Informationsverdichtung der Bildinformation dar, wenn die Koordinaten der Knoten jederzeit die Lage vorbestimmter Teile des sich bewegenden Objekts beschreiben. Das Skelettmodell repräsentiert zugleich Vorwissen über das Objekt, indem z.B. Knotenpaare und ggf. auch Knotentripel im Skelettmodell definiert sind, welche zusammenhängende Objektteile oder ggf. Objektflächen beschreiben, die in der gemessenen 2½ D-Bildinformation enthalten, also für die Kamera sichtbar sind. Das Skelettmodell ist schnell und genau in die Bildinformation, die dem Objekt entspricht, einzupassen. Das Einpassen erfolgt zwischen zwei Bildern einer Bildsequenz durch das fortlaufende Verschieben der Knoten und das mit der Bildsequenz Schritt haltende Aktualisieren des Skelettmodells. Von den vorgenannten zusammenhängenden Objektteilen oder ggf. Objektflächen wird davon ausgegangen, dass sich diese in ihrer Gesamtheit bewegen. Erfindungsgemäß wird daher unter bestimmten Voraussetzungen ein Knotenpaar oder ggf. ein Knotentripel simultan verschoben. Dabei ist zu betonen, dass die weiter unten beschriebenen Verschiebungsregeln nicht notwendig die Abstände der Knoten eines Knotenpaares oder ggf. Knotentripels zueinander erhalten, sondern die Verschiebung auch zu einer Vergrößerung der Abstände der Knoten eines Knotenpaares oder ggf. Knotentripels führen kann.

Eine Ausführungsform der Erfindung bezieht sich auf ein Verfahren zur Posenschätzung eines sich bewegenden Objekts (z.B. eines Menschen oder eines Roboters) durch Computerberechnung von Verschiebungen der 3D-Lagekoordinaten der Knoten eines Skelettmodells, das fortlaufend in eine Sequenz aus 30-Punktwolken eingepasst wird. Die Knotenkoordinaten liegen in einem elektronischen Datenspeicher tabelliert vor und die 3D-Punktwolken werden aus elektronisch aufgezeichneten Bildern einer Tiefensensorkamera bestimmt, die den sich bewegenden Menschen repräsentieren. Das in diesem Verfahren verwendete Skelettmodell ist eine Topologie, die als Topologie-Elemente $N_1$ Knoten, $N_2$ Kanten und $N_3$ Dreiecke mit $N_1, N_2 > 0$ und $N_3 \geq 0$ aufweist, wobei jedes Topologie-Element durch Knoten, Knotenpaare oder Knotentripel beschrieben und einem Teil des Objekts (z.B. einem menschlichen Körperteil oder einem Teil der Roboters) fest zugeordnet wird. Das Verfahren wird von einer Recheneinheit ausgeführt und umfasst folgende Schritte:

a. Zufälliges Auswählen eines Datenpunktes $X$ der 3D-Punktwolke;

b. Berechnen des Höhenfußpunktes $P$ zu $X$ bezüglich jedes Topologie-Elementes und Ermitteln, ob $P$ jeweils innerhalb des Topologie-Elementes liegt;

c. Berechnen des Abstandes von $X$ zu jedem Topologie-Element als Norm des Differenzvektors $X - P$;

d. Bestimmen jenes Topologie-Elementes, das den minimalen Abstand zu $X$ aufweist, aus allen Topologie-Elementen, deren Höhenfußpunkt $P$ innerhalb des Topologie-Elements liegt;

e. Verschieben des in Schritt d bestimmten Topologie-Elementes durch Verschieben aller das Topologie-Element festlegenden Knoten in Richtung des Vektors $X - P$, wobei der Verschiebungsvektor für einen Knoten mit einer Lernrate und, falls das Topologie-Element eine Kante oder ein Dreieck ist, mit einem Gewicht, das sich aus dem Höhenfußpunkt $P$ zu $X$ bezüglich des in Schritt d bestimmten Topologie-Elementes ergibt, multipliziert wird und

f. Wiederholen der Schritte a. bis e. für eine vorgegebene Anzahl von Lernschritten unter schrittweisem Verringern der Lernrate;

g. Aktualisieren der Knotenkoordinaten in der Tabelle des elektronischen Datenspeichers nach K-maligem Durchlaufen der vorbestimmten Anzahl von Lernschritten mit K $\geq$ 1;

h. Bereitstellen wenigstens der in der Tabelle aktualisierten Knotenkoordinaten zur weiteren Verarbeitung.

In einer weiteren Ausführungsform der Erfindung wird in Schritt b der Höhenfußpunkt $P$ bezüglich eines Topologie-Elementes als eine Linearkombination der das Topologie-Element festlegenden Knoten-Koordinatenvektoren dargestellt und aus den Darstellungskoeffizienten bestimmt wird, ob $P$ innerhalb des Topologie-Elements liegt.

In einer weiteren Ausführungsform der Erfindung wird das Gewicht in Schritt e aus den Darstellungskoeffizienten von **P** berechnet.

Gemäß einer Ausführungsform der Erfindung liegt die Anzahl der Wiederholungen der Schritte a bis e zwischen 1000 und 5000, insbesondere zwischen 2000 und 3000. Vorteilhafterweise kann die Lernrate zwischen dem Startwert 0,5 und dem Endwert 0,01 liegen.

Eine weitere Ausführungsform der Erfindung schlägt eine Vorrichtung zur Posenschätzung eines sich bewegenden Objekts vor. Diese Vorrichtung umfasst eine Tiefensensorkamera, einen elektronischen Datenspeicher und eine programmierbare Recheneinheit, wobei der Datenspeicher die elektronischen Bilder der Tiefensensorkamera speichert und die Recheneinheit dazu ausgebildet ist, aus diesen Bildern zeitlich Schritt haltend mit der Bildaufzeichnung durch die Kamera das erfasste Objekt repräsentierende 3D-Punktwolken zu bestimmen. Der Datenspeicher speichert ferner eine Liste mit 3D-Koordinaten für die Knoten eines Skelettmodells, wobei das Skelettmodell eine Topologie ist, die als Topologie-Elemente N1 Knoten, N2 Kanten und N3 Dreiecke mit N1,N2>0 und N3>=0 aufweist.

Die Recheneinheit kann diese Koordinaten für einzelne Knoten, vorbestimmte Knotenpaare und vorbestimmte Knotentripel als Repräsentation der Topologie-Elemente des Skelettmodells auslesen und ändern. Die Recheneinheit ist ferner ausgebildet, nach dem Bestimmen einer 3D-Punktwolke folgende Schritte durchzuführen:

a. Zufälliges Auswählen eines **Datenpunktes X** der 3D-Punktwolke;

b. Berechnen des Höhenfußpunktes **P** zu **X** bezüglich jedes Topologie-Elementes und Bestimmen, ob **P** jeweils innerhalb des Topologie-Elementes liegt;

c. Berechnen des Abstandes von **X** zu jedem Topologie-Element als Norm des Differenzvektors **X - P**;

d. Bestimmen jenes Topologie-Elementes, das den minimalen Abstand zu **X** aufweist, aus allen Topologie-Elementen, bei denen der Höhenfußpunkt **P** innerhalb des Topologie-Elements liegt;

e. Verschieben des in Schritt d bestimmten Topologie-Elementes durch Verschieben aller das Topologie-Element festlegenden Knoten in Richtung des Vektors **X - P**, wobei der Verschiebungsvektor für einen Knoten mit einer Lernrate und, falls das Topologie-Element eine Kante oder ein Dreieck ist, mit einem Gewicht, das sich aus dem Höhenfußpunkt **P** zu **X** bezüglich des in Schritt d bestimmten Topologie-Elementes ergibt, multipliziert wird und

f. Wiederholen der Schritte a. bis e. für eine vorgegebene Anzahl von Lernschritten unter schrittweisem Verringern der Lernrate;

g. Aktualisieren der Knotenkoordinaten in der Tabelle des elektronischen Datenspeichers nach K-maligem Durchlaufen der vorbestimmten Anzahl von Lernschritten mit K ≥ 1;

h. Bereitstellen wenigstens der in der Tabelle aktualisierten Knotenkoordinaten zur weiteren Verarbeitung.

Ferner bezieht sich eine weitere Ausführungsform der Erfindung auf ein computer-lesbares Speichermedium, das dadurch gekennzeichnet ist, dass es durch einen Mikroprozessor ausführbare Befehle speichert, die diesen veranlassen, das Verfahren zur Posenschätzung nach einer der beschriebenen Ausführungsformen der Erfindung durchzuführen.

## BESCHREIBUNG DER FIGUREN

Nachfolgend wird die Erfindung anhand von Ausführungsbeispielen unter Bezug auf die Figuren näher beschrieben. Einander entsprechende Elemente und Details in den Figuren sind mit den gleichen Bezugszeichen versehen. Dabei zeigt

Fig. 1:   Skizzen verwendbarer Skelettmodelle: a) gemäß WO 2010/130245 A1, b) Modell aus Knoten und Kanten, c) Modell aus Knoten, Kanten und Dreiecken;

Fig. 2:   a) Illustration der Lernregel aus der WO 2010/130245 A1, b) Geometrische Interpretation der Gewichte der Lernregel und c) Illustration der Wirkung der Lernregel für den Fall einer Kantenverschiebung;

Fig. 3:   a) Geometrische Interpretation der Gewichte der Lernregel und b) Darstellung der Wirkung der Lernregel für den Fall einer Dreiecksverschiebung;

Fig. 4:   Beispielbilder mit 3D-Punktwolken und erfindungsgemäß in diese Punktwolken eingepassten Skelettmodellen.

## DETAILIERTE BESCHREIBUNG DER ERFINDUNG

Ein Skelettmodell mit nur geringer Knotenanzahl dient einer effektiven Verdichtung der Bildinformation, wenn die Koordinaten der Knoten jederzeit die Lage vorbestimmter Teile des sich bewegenden Objekts beschreiben. Das Skelettmodell wird unter Ausnutzung von Vorwissen über das Objekt definiert. Beispielsweise ist vorab bekannt, welche zusammenhängende Objektteile oder ggf. Objektflächen für die Kamera sichtbar sind. Vorbestimmte Elemente des Skelettmodells, insbesondere Knotenpaare oder Knotentripel, können diese vorgenannten Objektteile oder Objektflächen repräsentieren und als Ganzes in Objektbilder eingepasst werden. Das Einpassen erfolgt zwischen zwei Bildern einer Bildsequenz durch das fortlaufende Verschieben der Knoten und das mit der Bildsequenz Schritt haltende Aktualisieren des Skelettmodells. Die zusammenhängenden Objektteile oder Objektflächen bewegen sich grundsätzlich als Ganzes, und es wird daher erfindungsgemäß unter bestimmten Voraussetzungen ein Knotenpaar oder ggf. ein Knotentripel simultan verschoben. Die Verschiebungsregeln erhalten dabei nicht notwendig die Abstände der Knoten eines Knotenpaares oder ggf. Knotentripels zueinander. Vielmehr kann die Verschiebung auch zu einer Vergrößerung der Abstände der Knoten eines Knotenpaares oder ggf. Knotentripels führen. Der erfindungsgemäße Verzicht auf die Einhaltung der Abstandserhaltung vereinfacht und beschleunigt die erforderlichen Berechnungen der Verschiebungsvektoren und führt gleichwohl zu einer guten Posenschätzung. Die Genauigkeit der Einpassung des Skelettmodells in die Objektbilder steigt mit der Zahl der Iterationen (Lernschritte).

Die Erfindung wird im Folgenden maßgeblich in Anlehnung an die Offenbarung der WO 2010/130245 A1 beschrieben. Grundsätzlich ist anzumerken, dass die in der WO 2010/130245 A1 beschriebene Posenschätzung als Ausgangspunkt betrachtet werden kann und zumindest eine Ausführungsform der Erfindung als eine Weiterbildung des aus dieser Schrift bekannten Verfahrens zur Posenschätzung betrachtet werden kann.

In diesem Kontext wird in der folgenden Beschreibung der Ausführungsformen der Erfindung davon ausgegangen,, dass die Aufzeichnung von 2½ D-Bildern (einzeln oder als Sequenz) und das Extrahieren einer den Menschen repräsentierenden 3D-Punktwolke wie in der WO 2010/130245 A1 beschrieben ausgeführt werden können. Insbesondere geht die Erfindung davon aus, dass die Bereitstellung von Bildern und Punktwolken zur Schätzung einer bewegten Pose mit einer Frequenz höher als 25 Hz erfolgen kann.

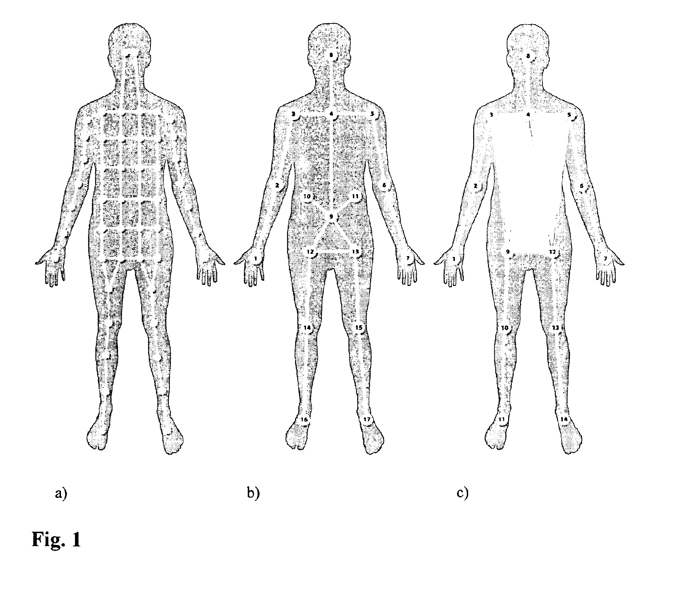

Erfindungsgemäß wird nun anstelle der Topologie aus der WO 2010/130245 A1, die zum Vergleich in Fig. 1 a) zu sehen ist, ein anatomisch motiviertes Skelettmodell verwendet. Insbesondere eignet sich das Modell aus Fig. 1 b), welches jeden Knoten eindeutig mit einem markanten Punkt der menschlichen Anatomie (z.B. Kopf, Schulter, Ellenbogen, Hand, Hüfte, Becken, Knie, Fuß,) assoziiert. In Fig. 1 c) ist eine Variante des Modells aus Fig. 1 b) dargestellt, bei der der Torso durch Dreiecke (jeweils definiert durch drei Knoten, die die Eckpunkte bilden) repräsentiert wird.

Durch die Identifikation der Knoten mit menschlichen Körperteilen erhalten auch die Kanten der Modelle eine anatomische Interpretation. So repräsentiert beispielsweise in Fig. 1 b) die Kante, die die Knoten 1 (rechte Hand) und 2 (rechter Ellenbogen) verbindet, zwangsläufig den rechten Unterarm. Kanten der Topologie stellen somit mehr als nur eine Nachbarschaftsrelation der Knoten dar. Die Anwendung der Lernregel für die SOM aus der WO 2010/130245 A1 kann für ein solches, in seiner Knotenzahl deutlich reduziertes Skelettmodell keine gute Einpassung des Modells in die 3D-Punktwolke mehr leisten, so dass im Folgenden ein auf die erfindungsgemäße Verwendung eines anatomisch motivierten Skelettmodell angepasstes Verfahren zur Posenschätzung beschrieben wird.

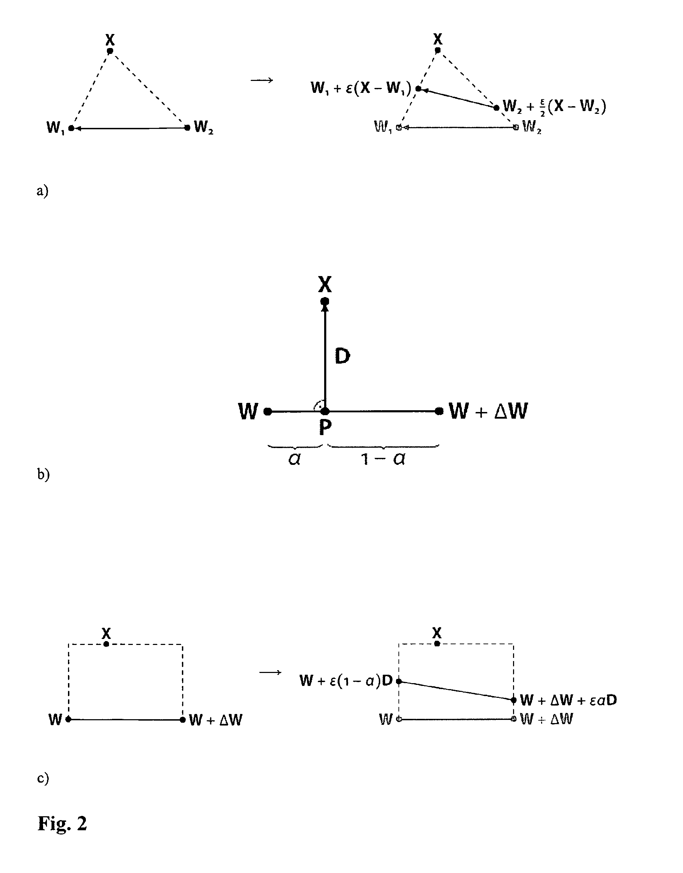

In Fig. 2 a) sind auf der linken Seite zwei Knoten $W_1$ und $W_2$ zu sehen, die durch eine Kante verbunden sind. Der Punkt $X$ bezeichnet einen zufällig gewählten Punkt aus der 3D-Punktwolke, in welche die Topologie einzupassen ist. Nach der Lehre der WO 2010/130245 A1 wird zunächst der dem Punkt $X$ nächste Knoten des Modells (hier: $W_1$) bestimmt und um $\varepsilon(X - W_1)$ in Richtung **auf $X$** verschoben. Dabei ist $\varepsilon$ eine reelle positive Zahl. Der nächste Nachbarknoten im Sinne der Topologie ist der über die Kante mit $W_1$ verbundene Knoten $W_2$. Auch dieser wird in Richtung auf $X$ verschoben um $\frac{\varepsilon}{2}(X - W_2)$. Die verschobenen Knoten sind auf der rechten Seite gezeichnet. Durch diese Lernregel wird die Kante zwischen den Knoten immer verkürzt.

Umfasst das Skelettmodell viele Knoten wie in der WO 2010/130245 A1, dann werden die Verkürzungen im Zuge weiterer Iterationen und Knotenverschiebungen im Laufe der Zeit wieder weitgehend kompensiert. Doch eine eindeutige Zuweisung bestimmter Knoten auf bestimmte Körperteile ist nicht immer durchgängig möglich.

Zur Verwendung der anatomischen Topologien der Fig. 1 b) oder c) werden daher erfindungsgemäß neue Lernregeln formuliert, die die Assoziierung von Knoten, Kanten und ggf. Dreiecken der Topologie mit Körperpartien des Menschen jederzeit erlauben.

Eine anatomische Topologie - oder auch: anatomisches Skelettmodell - im Sinne der Erfindung besteht wenigstens aus einer ersten Anzahl $N_1$ von Knoten, die mit menschlichen Körperpunkten assoziiert werden, und einer zweiten Anzahl $N_2$ von Kanten, die als eine anatomischen Gegebenheiten genügende Auswahl von Paaren der zuvor genannten Knoten erklärt sind.

Zur Verdeutlichung: In Fig. 1 b) umfasst das Modell die Knoten $W_j$ mit $j$ = 1, ..., 17 sowie weiterhin 17 Kanten, die durch eine Auswahl von Knotenpaaren repräsentiert sind. Beispielsweise zählen die Paare $(W_1, W_2)$, $(W_2, W_3)$ oder $(W_4, W_8)$ zu den Kanten des Modells, wohingegen etwa Paare $(W_2, W_6)$ oder $(W_{10}, W_{11})$ keine Kanten darstellen.

In einer vorteilhaften Ausgestaltung der Erfindung kann eine dritte Anzahl $N_3$ von Dreiecken Bestandteil des anatomischen Modells sein. Ein Dreieck wird durch ein Tripel von Knoten beschrieben, wobei die Knoten die Ecken des Dreiecks bezeichnen.

In Fig. 1 c) besteht das Modell unter anderem aus den drei Dreiecken beschrieben durch die Knotentripel $(W_3, W_4, W_9)$, $(W_9, W_4, W_{12})$ und $(W_4, W_5, W_{12})$.

Das Einfügen von Dreiecken in das anatomische Modell ist besonders zur Modellierung von Objekten (die z.B.

Körperregionen entsprechen) vorteilhaft, die nur eine geringere innere Beweglichkeit aufweisen und sich gewöhnlich so im Bild bewegen, dass die relative Lage der Knoten, die die Ecken der Dreiecke bilden, zueinander nur wenig verändert wird. Dies trifft zum Beispiel auf den Torso eines Menschen in einer Gesamtaufnahme zu, kann aber auch beispielsweise bei Großaufnahmen einer Hand die Handinnenfläche oder den Handrücken betreffen. Letzten Endes muss der Nutzer des Posenschätzungsverfahrens stets selbst entscheiden, welches Objekt betrachtet werden soll, bzw. welche Topologie für seine konkreten Zwecke geeignet und/oder besonders günstig erscheint.

Die vorliegende Erfindung stellt gemäß einer Ausführungsform SOM-Lernregeln für anatomische Topologien aus $N_1$ Knoten, $N_2$ Kanten und $N_3$ Dreiecken zur Einpassung in 3D-Punktwolken bereit, wobei $N_1$, $N_2 > 0$ und $N_3 \geq 0$ gilt. Knoten, Kanten und Dreiecke werden nachfolgend unter dem Begriff Topologie-Elemente zusammengefasst.

Die SOM wird mit den Knoten der Topologie identifiziert. Die Lernregeln zielen darauf ab, die Knotenpositionen so zu verschieben, dass die Topologie in eine 3D-Punktwolke eingepasst wird. Die Vorgabe von Kanten und ggf. Dreiecken bedeutet darüber hinaus, dass manche Paare und ggf. einige Tripel von Knoten jeweils miteinander verknüpfte Lernregeln zu folgen haben.

Die Lernregeln gemäß einer Ausführungsform der Erfindung werden nach folgendem Konzept gebildet. Ausgehend vom Vorliegen einer Bildsequenz, für die eine fortlaufende Posenschätzung erfolgen soll, wird das Skelettmodell, welches eine Liste von Knotenpositionen (beschrieben in einem 3D-Koordinatensystem), Knotenpaaren und ggf. Knotentripeln ist, jeweils bei Vorliegen eines neuen Bildes der Sequenz aktualisiert. Sobald das neue Bild von der Tiefensorkamera aufgezeichnet und mittels Bildsegmentierung und Projektion in eine Liste von 3D-Koordinaten (3D-Punktwolke) für Punkte der Oberfläche des betrachteten Objekts - z.B. der gesamte Mensch, sein Oberkörper, seine Hand, etc. - umgewandelt worden ist, erfolgt das SOM-Training dadurch, dass ein einzelner Punkt der Punktwolke zufällig ausgewählt und das zu diesem Punkt nächstgelegene Topologie-Element in Richtung auf den ausgewählten Punkt zu verschoben wird. Die Verschiebung erfolgt durch Vektoraddition im 3D-Raum, wodurch einzelne Knotenpositionen in der oben genannten Liste der Knotenpositionen verändert bzw. aktualisiert werden.

Nach dieser Verschiebung wird der nächste Punkt der 3D-Punktwolke zufällig ausgewählt und ein - höchstwahrscheinlich anderes - dem nun gewählten Punkt nächstgelegenes Topologie-Element auf diesen Punkt zu verschoben. Punktauswahl und Verschiebung wird für eine vorbestimmte Zahl von Schritten wiederholt, wobei die generelle Verschiebungsweite in jedem Schritt verringert wird. Nach einer ausreichend hoch vorbestimmten Zahl von Schritten ist das Skelettmodell schließlich für das neue Bild aktualisiert.

Vorzugsweise werden wenigstens 1000 und höchstens 5000 Verschiebungen von Topologie-Elementen zur Einpassung des Skelettmodells in eine 3D-Punktwolke vorgenommen. Besonders bevorzugt liegt die Anzahl der Verschiebungen zwischen 2000 und 3000. Mehrere 1000 Verschiebungen von Knotenpositionen sind mit heutigen Rechnern binnen weniger Millisekunden durchführbar.

Es ist hiernach möglich, dass das einem ausgewählten Punkt nächstgelegene Topologie-Element kein Knoten ist. Kanten oder Dreiecke werden dadurch verschoben, dass alle Knoten, die eine Kante oder ein Dreieck bestimmen, in einer miteinander verknüpften Weise verschoben werden. Die Verschiebung kann also abhängig vom zu verschiebenden Topologie-Element einen, zwei oder drei Knoten gleichzeitig betreffen.

Nachfolgend wird die Bestimmung des nächstgelegenen Topologie-Elements näher erläutert, und es werden die konkreten Verschiebungsregeln für die Topologie-Elemente benannt.

Zu einem Punkt $X$ der 3D-Punktwolke - also zu einem Koordinatenpunkt im 3D-Raum, der nach der Abbildung des betrachteten Objekts mit einer Tiefensorkamera und der anschließenden Bildsegmentierung und Projektion einen Punkt der Körperoberfläche des Menschen repräsentiert und zufällig aus der Gesamtheit dieser Punkte ausgewählt wird-werden zunächst die Höhenfußpunkte von $X$ bezüglich aller Topologie-Elemente bestimmt. Der Höhenfußpunkt $P$ von $X$ bezüglich eines Topologie-Elementes ist derjenige Punkt des durch das Topologie-Element aufgespannten Unterraumes des 3D-Raumes, der dem Punkt $X$ am nächsten liegt. Dabei spannen Knoten nulldimensionale Unterräume auf, die nur den Knoten selbst enthalten. Kanten spannen Geraden im 3D-Raum auf, die durch die die Kante definierenden Knoten verlaufen. Dreiecke spannen Ebenen im 3D-Raum auf, die die das Dreiecke definierenden Knoten enthalten.

Der dem Punkt $X$ nächstgelegene Punkt eines von einem Topologie-Element aufgespannten Unterraumes wird mit Hilfe eines Abstandsmaßes berechnet. Abstände im 3D-Raum können mit beliebigen Normen bestimmt werden. Vorzugsweise wird die euklidische Norm (auch: $L_2$-Norm oder Pythagoras-Abstand) benutzt, jedoch können auch andere Abstandsmaße verwendet werden.

Der Höhenfußpunkt $P$ befindet sich in einem Knoten, wenn das Topologie-Element ein Knoten ist, und er fällt dabei mit eben diesem Knoten zusammen.

Der Höhenfußpunkt $P$ befindet sich auf einer Gerade im 3D-Raum, wenn das Topologie-Element eine Kante ist.

$$(1) \qquad P = W + \alpha \Delta W$$

Dabei bezeichnet *W* einen - beliebigen - ersten Knoten der Kante, △*W* den Differenzvektor zwischen dem zweiten und dem ersten Knoten der Kante und $\alpha$ eine reelle Zahl. Zur Verdeutlichung: die Kante wird beschrieben durch das Knotenpaar **(W, W + △W)**.

Der Höhenfußpunkt *P* befindet sich auf einer Ebene im 3D-Raum, wenn das Topologie-Element ein Dreieck ist. Der Punkt *P* ist darstellbar als

$$(2) \qquad P = W + \sigma_1 \Delta W_1 + \sigma_2 \Delta W_2$$

mit *W* als ein - beliebiger - erster Knoten des Dreiecks, △*W*$_1$, △*W*$_2$ als Differenzvektoren zwischen dem zweiten bzw. dem dritten Knoten und dem ersten Knoten des Dreiecks und $\sigma_1$, $\sigma_2$ als reellen Zahlen. Zur Verdeutlichung: das Dreieck wird beschrieben durch das Knotentripel **(W, W + △W$_1$, W + △W$_2$)**.

Die Koeffizienten $\alpha$, $\sigma_1$, $\sigma_2$ aus den Gleichungen (1) und (2) sollen im Folgenden als „topologiekonforme Darstellungskoeffizienten" eines Höhenfußpunktes bezeichnet werden. Es handelt sich dabei formal um die Komponenten des Vektors *P* bezüglich einer nicht normierten und ggf. schiefwinkligen Basis des durch das Topologie-Element, für welches *P* bestimmt wird, aufgespannten Unterraumes des 3D-Raumes. Man kann auch sagen, der Höhenfußpunkt *P* bezüglich eines Topologie-Elementes wird als eine Linearkombination der das Topologie-Element festlegenden Knoten-Koordinatenvektoren dargestellt.

Die Höhenfußpunkte eines Punktes *X* bezüglich der Topologie-Elemente werden daraufhin überprüft, ob sie *innerhalb* dieser Topologie-Elemente liegen.

Alle Höhenfußpunkte bezüglich Knoten liegen per Definition *innerhalb* der Knoten. Ebenso per Definition ist der topologiekonforme Darstellungskoeffizient eines Höhenfußpunktes bezüglich eines Knotens immer Eins.

Ein Höhenfußpunkt bezüglich einer Kante liegt genau dann *innerhalb* der Kante, wenn er zwischen den Knoten liegt, die die Kante definieren. Dies bedeutet, dass ein Höhenfußpunkt dann und nur dann *innerhalb* der Kante liegt, wenn sein Darstellungskoeffizient $\alpha$ zwischen 0 und 1 liegt.

Ein Höhenfußpunkt bezüglich eines Dreiecks liegt genau dann *innerhalb* des Dreiecks, wenn er im Innern der Dreiecksfläche liegt, die von den Knoten definiert wird. Dies ist für einen Höhenfußpunkt bezüglich eines Dreieck dann und nur dann der Fall, wenn seine Darstellungskoeffizienten $\sigma_1$, $\sigma_2$ und deren Summe $\sigma_1 + \sigma_2$ zwischen 0 und 1 liegen.

Der Abstand eines Punktes *X* der 3D-Punktwolke zu einem Topologie-Element kann als eine Norm des Differenzvektors *D* zwischen *X* und dem Höhenfußpunkt *P* , also i. F. *D* := *X* - *P,* berechnet werden. Vorzugsweise wird die euklidische Norm benutzt. Damit wird der Abstand

$$(3) \quad d = \|D\|_2 = \|X - P\|_2 = \sqrt{(x_1 - p_1)^2 + (x_2 - p_2)^2 + (x_3 - p_3)^2}$$

mit $x_1$, $x_2$, $x_3$, $p_1$, $p_2$, $p_3$ als reellwertige Komponenten der **Vektoren *X*** und *P* bezüglich des herkömmlichen 3D-Koordinatensystems, in dem sowohl die 3D-Punktwolke als auch das Skelettmodell beschrieben sind, für jedes der Topologie-Elemente berechnet.

Im Weiteren wird der Abstand des Punktes *X* zu einem Topologie-Element nur dann weiter verwendet, wenn der Höhenfußpunkt *P* bezüglich dieses Topologie-Elementes *innerhalb* des Topologie-Elementes liegt. Trifft dies nicht zu, wird der Höhenfußpunkt verworfen, und es findet entweder keine Abstandsberechnung statt oder der berechnete Abstand wird im Folgenden ignoriert.

Diese Selektion stellt sicher, dass nur solche Abstände in der weiteren Bearbeitung berücksichtigt werden, die dem Zweck der Skelettmodelleinpassung tatsächlich dienen. Beispielsweise könnte der Punkt *X* genau in einer Ebene im 3D-Raum liegen, die von einem Dreieck aufgespannt wird, das den Oberkörper des Menschen repräsentiert. Der Höhenfußpunkt *P* fällt dann mit *X* zusammen, und der Abstand *d* ist Null. Wenn der Punkt aber zugleich in der Nähe der Position des Knotens liegt, der die rechte Hand repräsentiert, und der rechte Arm vom Körper weg ausgestreckt gehalten wird, dann soll die Verschiebungsregel auf den Knoten angewandt werden und nicht auf das Dreieck des Oberkörpers, auch wenn der numerische Abstand seiner Ebene zu *X* kleiner ist als der des Knotens zu *X.*

Aus der Gesamtheit aller berechneten - und in der Auswertung verbleibenden - Abstände wird durch Aufsuchen des Minimums dasjenige Topologie-Element identifiziert, das dem Punkt *X* am nächsten liegt, also den kleinsten Abstand zu *X* aufweist.

Das identifizierte Topologie-Element wird nun erfindungsgemäß verschoben, wobei die Knoten, die das Topologie-Element definieren, ggf. gemeinsam verschoben werden.

Wenn das dem Punkt *X* nächstgelegene Topologie-Element ein Knoten ist, dann erfolgt die Verschiebung gemäß

$$(4) \qquad W \xrightarrow{update} W + \varepsilon_t D$$

wie bereits aus dem Stand der Technik bekannt. In der WO 2010/130245 A1 - dort Gleichung (4) - wird auch die vom Iterationsschritt abhängige Lernrate

$$(5) \qquad \varepsilon_t = \varepsilon_i \left( \frac{\varepsilon_f}{\varepsilon_i} \right)^{\frac{t}{t_{max}}}$$

erklärt. Dabei sind $\varepsilon_i$ und $\varepsilon_f$ vorbestimmte Start- und Endwerte der Lernrate und $t_{max}$ ist die vorbestimmte Maximalanzahl von Lernschritten. Der Laufindex t zählt die Lernschritte (Iterationen) bis $t_{max}$ hoch. Für jeden neu gewählten Punkt $X$ der 3D-Punktwolke wird der Zähler $t$ um Eins erhöht bis er $t_{max}$ erreicht. Bevorzugte Festlegungen für die Lernrate sind $\varepsilon_i$ = 0,5 und $\varepsilon_f$ = 0,01.

Wenn das dem Punkt $X$ nächstgelegene Topologie-Element eine Kante ist, dann erfolgt die Verschiebung gemäß

$$(6) \qquad W \xrightarrow{update} W + \varepsilon_t(1 - \alpha)D$$

$$(7) \qquad W + \Delta W \xrightarrow{update} W + \Delta W + \varepsilon_t \alpha D$$

In Fig. 2 b) sind die Kante *(W, W + △W),* ein Punkt $X$ der 3D-Punktwolke und sein zugehöriger Höhenfußpunkt $P$ bezüglich der Kante sowie der Differenzvektor $D$ = $X$ - $P$ gezeichnet. Der topologiekonforme Darstellungskoeffizient $\alpha$ ist als derjenige Anteil der Kantenlänge $\|\Delta W\|_2$ anzusehen, um den man ausgehend vom Knoten $W$ in Richtung $\Delta W$ zu gehen hat, um den Punkt $P$ zu erreichen. Offensichtlich ist in Fig. 2 b) 0 < $\alpha$ < 1, und der Höhenfußpunkt liegt somit innerhalb der Kante.

Fig. 2 c) skizziert die Verschiebung der beiden Knoten. Sie werden beide in Richtung des Vektors $D$ = $X$ - $P$ bewegt, also nicht - wie im Stand der Technik - direkt auf $X$ zu. Liegt der Punkt $X$ dem Knoten $W$ näher als dem Knoten $W$ + $\Delta W$, so gilt dies auch für den Höhenfußpunkt $P$, und folglich ist $\alpha$ < 0,5. Der Knoten $W$ wird dann weiter verschoben als der Knoten $W$ + $\Delta W$. Auf diese Weise nähert sich die gesamte Kante dem Punkt $X$ gewichtet nach dem Abstand von $X$ bzw. $P$ zu den Knoten an.

Wenn das dem Punkt $X$ nächstgelegene Topologie-Element ein Dreieck ist, dann erfolgt die Verschiebung gemäß

$$(8) \qquad W \xrightarrow{update} W + \varepsilon_t(1 - \sigma_1 - \sigma_2)D$$

$$(9) \qquad W + \Delta W_1 \xrightarrow{update} W + \Delta W_1 + \varepsilon_t \sigma_1 D$$

$$(10) \qquad W + \Delta W_2 \xrightarrow{update} W + \Delta W_2 + \varepsilon_t \sigma_2 D$$

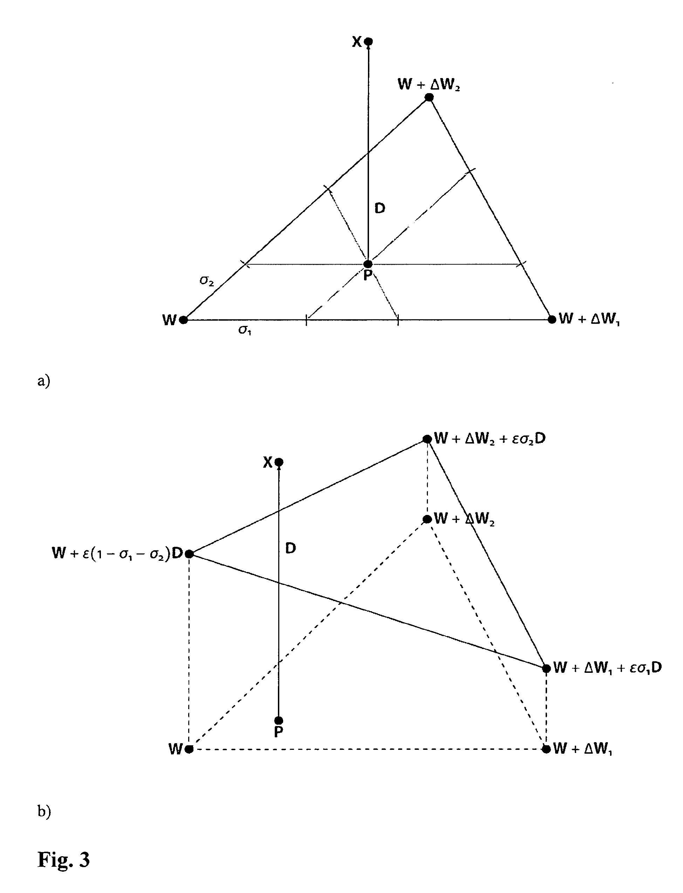

Fig. 3 illustriert die Verschiebungsregel für Dreiecke.

In Fig. 3 a) sind das Ausgangsdreieck des Skelettmodells und der zufällig gewählte Punkt $X$ dargestellt. Der zu $X$ gehörige Höhenfußpunkt $P$ liegt in der Dreiecksebene und kann als eine Linearkombination der Knoten-Koordinatenvektoren gemäß Gleichung (2) dargestellt werden. Die Darstellungskoeffizienten $\sigma_1$, $\sigma_2$ sind zur Veranschaulichung an die Dreiecksseiten geschrieben. Sie sind zu interpretieren analog zum Koeffizienten $\alpha$ in Fig. 2 b) als Anteile der Dreieckseitenlängen. Der Höhenfußpunkt liegt innerhalb des Dreiecks, so dass der Abstand von $X$ zu dem Dreieck als Norm des Vektors $D$ = $X$ - $P$ bestimmt und in der weiteren Berechnung verwendet wird. Wenn sich dieser Abstand als der kleinste Abstand von $X$ zu allen Topologie-Elementen des Skelettmodells erweist, dann wird das Dreieck verschoben.

Das verschobene Dreieck ist in Fig. 3 b) skizziert. Auch hier werden alle Knoten - und mit ihnen auch alle Punkte auf den Dreiecksseiten und in der Dreiecksfläche - entsprechend gewichtet mit dem ursprünglichen Abstand der Knoten zu den Punkten $X$ und $P$ verschoben. Diese Gewichtung mit dem Abstand ist von Bedeutung für die Effizienz der Posenschätzung, da sie unnötige Fehler vermeidet. Gerade an Fig. 3 b) ist der Vorteil leicht einzusehen: Liegt nämlich der Punkt **P** sehr nahe bei einem der drei Knoten, die das Dreieck festlegen, so erfolgt die Dreiecksverschiebung derart, dass fast nur dieser nächstgelegene Knoten bewegt wird, während die beiden anderen im Wesentlichen ihre Position beibehalten. Es existiert somit ein "fließender Übergang" zwischen Knoten-, Kanten und Dreiecksverschiebung bei dem hier beschriebenen Verfahren.

Es ist an Fig. 2 c) gut zu erkennen, dass eine Kante (**W**, **W** + Δ**W**) durch Anwenden der Lernregeln (6) und (7) keinesfalls verkürzt, durchaus aber verlängert werden kann. Dasselbe gilt für die Seiten eines Dreiecks (**W**, **W** + Δ**W**$_1$, **W** + Δ**W**$_2$) bei Anwenden der Lernregeln der Gleichungen (8) bis (10).

Um im Zuge des Trainierens keine ausufernden Kantenlängen und Dreiecksseitenlängen zu erhalten, wird in einer weiteren Ausführungsform der Erfindung ein "Schrumpfparameter" δ eingeführt. Dieser kann beispielsweise zu δ = 0,05 gesetzt wird. Die Lernregeln werden zugleich so modifiziert, dass die Knoten während des Verschiebens geringfügig aufeinander zu bewegt werden.

Anstelle der Regeln (6) und (7) benutzt man vorzugsweise

$$(11) \qquad W \xrightarrow{update} W + \delta \Delta W + \varepsilon_t(1 - \alpha)D$$

$$(12) \qquad W + \Delta W \xrightarrow{update} W + (1 - \delta)\Delta W + \varepsilon_t \alpha D$$

und anstelle der Gleichungen der Regeln (8) bis (10) verwendet man

$$(13) \qquad W \xrightarrow{update} W + \delta \Delta W_1 + \delta \Delta W_2 + \varepsilon_t(1 - \sigma_1 - \sigma_2)D$$

$$(14) \qquad W + \Delta W_1 \xrightarrow{update} W + (1 - \delta)\Delta W_1 + \delta(\Delta W_2 - \Delta W_1) + \varepsilon_t \sigma_1 D$$

$$(15) \qquad W + \Delta W_2 \xrightarrow{update} W + (1 - \delta)\Delta W_2 + \delta(\Delta W_1 - \Delta W_2) + \varepsilon_t \sigma_2 D$$

Das beschriebene Verfahren kann zur Schätzung der menschlichen Pose durch die Berechnung von Verschiebungen von Knoten eines Skelettmodells, das wie in Fig. 1 der menschlichen Anatomie nachempfunden wird eingesetzt werden. Es ist aber offensichtlich, dass dasselbe Verfahren ebenso auf die Bewegungen eines Tieres oder eines sich bewegenden Roboters anwendbar ist. Die Erfindung soll die Posenschätzung aller Objekte umfassen, die aus miteinander verbundenen und gegeneinander beweglichen Teilen bestehen und für die sich ein Skelettmodell aus Knoten, Kanten und ggf. Dreiecken zweckmäßig definieren lässt.

Das Skelettmodell ist eine Tabelle mit 3D-Raumkoordinaten für die Knoten der Topologie sowie eine Liste mit vorbestimmten Knotenpaaren und ggf. Knotentripeln zur Festlegung von Kanten und Dreiecken. Die Liste der Knotenpaare und Knotentripel ist unveränderlich, lediglich die Knotenkoordinaten können sich während der Durchführung der Posenschätzung ändern. Die Tabelle mit Knotenkoordinaten steht in einem elektronischen Datenspeicher zur Verfügung und kann von einer Recheneinheit ausgelesen werden. Die Recheneinheit ermittelt anhand eines ebenfalls gespeicherten Bildes der Tiefensensorkamera und einer daraus bestimmten 3D-Punktwolke die Verschiebungen der Knotenpositionen zum fortlaufenden Einpassen des Skelettmodells in die Punktwolken.

Das Einpassen des anatomischen Modells in die Punktwolke - mithin das Trainieren der SOM - erfolgt gemäß einer Ausführungsform der Erfindung zusammengefasst durch:

a. Zufälliges Auswählen eines Datenpunktes **X** der Punktwolke;
b. Berechnen des Höhenfußpunktes **P** zu **X** bezüglich eines Topologie-Elementes und Bestimmen seines wenigstens einen topologiekonformen Darstellungskoeffizienten;
c. Verwerfen eines Höhenfußpunktes, wenn er nicht innerhalb des Topologie-Elementes liegt;
d. Berechnen des Abstandes von **X** zu dem Topologie-Element als eine Norm des Differenzvektors **X - P**,
e. Wiederholen der Schritte b. bis d. für alle Topologie-Elemente des anatomischen Modells;
f. Bestimmen jenes Topologie-Elementes, das den minimalen Abstand zu **X** aufweist;
g. Verschieben des unter f. bestimmten Topologie-Elementes durch Verschieben aller das Topologie-Element festlegenden Knoten in Richtung des Vektors **X - P,** wobei die Verschiebungsvektoren mit einer Lernrate und mit Gewichten, die sich aus den topologiekonformen Darstellungskoeffizienten des Höhenfußpunktes **P** zu **X** bezüglich des unter e. bestimmten Topologie-Elementes ergeben, multipliziert werden und

h. Wiederholen der Schritte a. bis g. für eine vorgegebene Anzahl von Lernschritten unter schrittweisem Verringern der Lernrate.

Die genaue Art und Weise, wie sich die in Schritt g genannten Gewichte aus den topologiekonformen Darstellungskoeffizienten ergeben, ist den Gleichungen (6) bis (10) oder alternativ (11) bis (15) zu entnehmen, wobei Letztere einen zusätzlichen, vorbestimmten Parameter $\delta$ umfassen. Für die Verschiebung von Topologie-Elementen, die Knoten sind, gemäß Gleichung (4) sind die Gewichte per Definition Eins.

Ist die vorgegebene Anzahl von Lernschritten erreicht, hat die Recheneinheit für alle Knoten des Skelettmodells verschobene Koordinaten berechnet. Die verschobenen Koordinaten werden in der Regel für alle Knoten von den ursprünglich tabellierten Knotenkoordinaten abweichen, können aber in Ausnahmen auch für einzelne Knoten mit diesen identisch sein.

Die verschobenen Knotenkoordinaten werden von der Recheneinheit in den elektronischen Datenspeicher geschrieben, wobei die ursprünglichen Koordinateneinträge entweder i) überschrieben oder ii) als veraltet gekennzeichnet werden und in weiteren Lernschritten nicht mehr zum Einsatz kommen. Die Knotenkoordinaten werden so in der Tabelle des elektronischen Datenspeichers aktualisiert. Es ist vorteilhafterweise möglich, den Schritt des Aktualisierens der Knotenkoordinaten in der Tabelle des elektronischen Datenspeichers nach nur einem Durchlauf der vorbestimmten Anzahl von Lernschritten auszuführen und dann das Folgebild der Bildsequenz der Tiefensensorkamera sowie die daraus ermittelte Punktwolke heranzuziehen, um den nächsten Durchlauf der Schritte a bis h zu beginnen.

Ebenso kann man aber auch die Lernschritte für ein und dieselbe Punktwolke mehrfach hintereinander durchlaufen, um so eine Mehrzahl von Verschiebungen der Knotenkoordinaten zu berechnen. Diese Mehrzahl von Verschiebungen kann dann z.B. arithmetisch gemittelt werden, und die Knotenkoordinaten werden in der Tabelle des elektronischen Datenspeichers erst mit der gemittelten Verschiebung aktualisiert. Dieses Vorgehen ist rechnerisch aufwendiger und mithin langsamer, kann aber zufällig auftretende, ungünstige Verschiebungen (z.B. wenn die Punktwolke auch Punkte mit Außenseiterlage umfasst, die zufällig ausgewählt werden) wirksam unterdrücken.

Ganz allgemein erfolgt daher das Aktualisieren der Knotenkoordinaten nach K-maligem Durchlaufen der vorbestimmten Anzahl von Lernschritten, wobei K ≥ 1 ist.

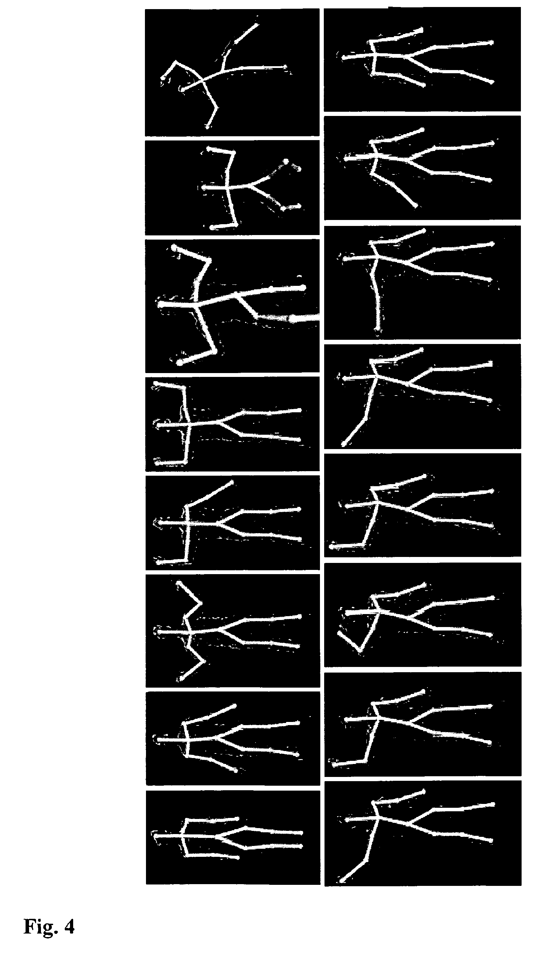

Ein Ausführungsbeispiel für das erfindungsgemäße Posenschätzungsverfahren mit dem Skelettmodell aus Fig. 1 b) wird anhand von Beispielbildern aus Videosequenzen in Fig. 4 vorgestellt. Die Videobilder einer Tiefensensorkamera stellen mittels der an sich bekannten Bildsegmentierung fortlaufend 3D-Punktwolken bereit, die einen sich bewegenden Menschen repräsentieren. Die Einpassung des anatomischen Skelettmodells erfolgt mit den oben beschriebenen Lernregeln in Echtzeit, und die Zuordnung der Modellknoten zu den verschiedenen Körperpartien des Menschen bleibt durchgehend korrekt erhalten, wie man Fig. 4 gut entnehmen kann.

Insbesondere erlaubt die nun erreichte robuste Knoten-Körperteil-Zuweisung eine deutlich stabilere Befehlseingabe mittels Gestensteuerung, beispielsweise über die Verfolgung allein der Bewegungen der rechten Hand. Die übrigen Modellknoten können von einer Maschine, die die Skelettknotenpositionen interpretiert, bedarfsgerecht ignoriert oder auch als Zusatzeingaben gewertet werden. So ist es etwa möglich, komplexere Eingaben dadurch vorzunehmen, dass Bewegungen der rechten und der linken Hand gleichzeitig separat verfolgt und interpretiert werden. Zum Beispiel kann ein Anheben der linken Hand auf Kopfhöhe ein Äquivalent zum Drücken einer bestimmten Taste (z.B. Shift-Taste) auf einer Tastatur sein oder einen anderen Satz von Befehlsinterpretationen für die Eingaben der rechten Hand aufrufen.

Das beschriebene Verfahren erfordert neben einer schnellen Erfassung und Bereitstellung von 2½ D-Bildern mittels Tiefensensorkamera auch einen elektronischen Datenspeicher zur mindestens zeitweisen Speicherung der Messdaten und zur Speicherung der Lagekoordinaten der Topologie-Elemente des anatomischen Skelettmodells sowie eine mit dem Datenspeicher kommunizierende elektronische Recheneinheit, die die beschriebenen Berechnungen durchführt und insbesondere das fortlaufende Aktualisieren der Lagekoordinaten der Topologie-Elemente im Datenspeicher veranlasst. Ferner kann dieselbe Recheneinheit das jeweils aktuelle Skelettmodell zeitlich Schritt haltend entweder selbst interpretieren und z.B. in Steuerbefehle für nachgeordnete Vorrichtungen übersetzen oder lediglich ggf. selektierte Knotenpositionen zur weiteren Interpretation ausgeben.

Wie eingangs beschrieben, kann das beschriebene Verfahren zur Posenschätzung durch eine Vorrichtung, insbesondere eine Recheneinheit ausgeführt werden. Die Recheneinheit kann ein handelsüblicher, programmierbarer Mikroprozessor sein, aber auch der Einsatz von FPGAs oder ASICs ist möglich. Eine weitere Ausführungsform der Erfindung bezieht sich auf ein Speichermedium, welches durch eine Recheneinheit ausführbare Befehle speichert, die die Recheneinheit zur Ausführung der hier beschriebenen Berechnungen zum Zweck der Posenschätzung veranlassen.

Insbesondere kann eine Tiefensensorkamera, die eine Recheneinheit zur Ermittlung der Abstandskoordinate umfasst, auch unmittelbar dazu ausgebildet sein, das erfindungsgemäße Verfahren durchzuführen. Eine solche Kamera in baulicher Einheit mit wenigstens einer erfindungsgemäß ausgebildeten Recheneinheit ist entsprechend geeignet, direkt das Bild eines sich bewegenden Menschen in 3D-Koordinaten seiner wesentlichen Körperteile zu übersetzen. Dies ist vergleichbar mit einer Motion-Capture-Vorrichtung, bei der allerdings auf die bislang üblichen Marker am Körper des Menschen verzichtet werden kann.

**Patentansprüche**

1. Verfahren zur Posenschätzung eines sich bewegenden Objekts durch Computerberechnung von Verschiebungen der 3D-Lagekoordinaten der Knoten eines Skelettmodells, das fortlaufend in eine Sequenz aus 3D-Punktwolken eingepasst wird, wobei die Knotenkoordinaten in einem elektronischen Datenspeicher tabelliert vorliegen und die 3D-Punktwolken aus elektronisch aufgezeichneten Bildern einer Tiefensensorkamera bestimmt werden, die das sich bewegende Objekt repräsentieren,
wobei das Skelettmodell eine Topologie ist, die als Topologie-Elemente $N_1$ Knoten, $N_2$ Kanten und $N_3$ Dreiecke mit $N_1, N_2 > 0$ und $N_3 \geq 0$ aufweist, und jedes Topologie-Element durch Knoten, Knotenpaare oder Knotentripel beschrieben und einem Teil des sich bewegenden Objekts fest zugeordnet wird, und wobei eine Recheneinheit folgende Schritte ausführt:

   a. Zufälliges Auswählen eines Datenpunktes $X$ der 3D-Punktwolke;
   b. Berechnen des Höhenfußpunktes $P$ zu $X$ bezüglich jedes Topologie-Elementes und Ermitteln, ob $P$ jeweils innerhalb des Topologie-Elementes liegt;
   c. Berechnen des Abstandes von $X$ zu jedem Topologie-Element als Norm des Differenzvektors $X - P$;
   d. Bestimmen jenes Topologie-Elementes, das den minimalen Abstand zu $X$ aufweist, aus allen Topologie-Elementen, deren Höhenfußpunkt $P$ innerhalb des Topologie-Elements liegt;
   e. Verschieben des in Schritt d bestimmten Topologie-Elementes durch Verschieben aller das Topologie-Element festlegenden Knoten in Richtung des Vektors $X - P$, wobei der Verschiebungsvektor für einen Knoten mit einer Lernrate und, falls das Topologie-Element eine Kante oder ein Dreieck ist, mit einem Gewicht, das sich aus dem Abstand des Knotens zum Höhenfußpunkt $P$ zu $X$ bezüglich des in Schritt d bestimmten Topologie-Elementes ergibt, multipliziert wird und
   f. Wiederholen der Schritte a bis e für eine vorgegebene Anzahl von Lernschritten unter schrittweisem Verringern der Lernrate;
   g. Aktualisieren der Knotenkoordinaten in der Tabelle des elektronischen Datenspeichers nach K-maligem Durchlaufen der vorbestimmten Anzahl von Lernschritten mit K $\geq$ 1;
   h. Bereitstellen wenigstens der in der Tabelle aktualisierten Knotenkoordinaten zur weiteren Verarbeitung.

2. Verfahren nach Patentanspruch 1, wobei in Schritt b der Höhenfußpunkt $P$ bezüglich eines Topologie-Elementes als eine Linearkombination der das Topologie-Element festlegenden Knoten-Koordinatenvektoren dargestellt wird und aus den Darstellungskoeffizienten bestimmt wird, ob $P$ innerhalb des Topologie-Elements liegt.

3. Verfahren nach Patentanspruch 1 oder 2, wobei das Gewicht in Schritt e aus den Darstellungskoeffizienten von $P$ berechnet wird.

4. Verfahren nach einem der Patentansprüche 1 bis 3, wobei die Anzahl der Wiederholungen der Schritte a bis e zwischen 1000 und 5000, insbesondere zwischen 2000 und 3000, liegt.

5. Verfahren nach einem der Patentansprüche 1 bis 4, wobei die Lernrate zwischen dem Startwert 0,5 und dem Endwert 0,01 liegt.

6. Verfahren nach einem der Patentansprüche 1 bis 5, ferner umfassend die Schritte des Generierens von Steuerungsbefehlen für eine zu steuernde Vorrichtung basierend auf Informationen der Tabelle der aktualisierten Knotenkoordinaten und des Steuerns der zu steuernden Vorrichtung mittels der Steuerbefehle.

7. Vorrichtung zur Posenschätzung eines sich bewegenden Objekts umfassend:

   eine Tiefensensorkamera zum Erfassen von elektronischen Bildern des sich bewegenden Objekts,
   einen elektronischen Datenspeicher zum Speichern der elektronischen Bilder der Tiefensensorkamera und
   eine Recheneinheit, die dazu ausgebildet ist, aus den elektronischen Bildern zeitlich Schritt haltend mit der Bildaufzeichnung durch die Kamera eine das Objekt repräsentierende 3D-Punktwolke zu bestimmen, und wobei der Datenspeicher ferner eine Liste mit 3D-Koordinaten für die Knoten
   eines Skelettmodells speichert, wobei das Skelettmodell eine Topologie ist, die als Topologie-Elemente $N_1$ Knoten, $N_2$ Kanten und $N_3$ Dreiecke mit $N_1, N_2 > 0$ und $N_3 \geq 0$ aufweist, und die Recheneinheit diese Koordinaten für
   einzelne Knoten, vorbestimmte Knotenpaare und vorbestimmte Knotentripel als Repräsentation der Topologie-Elemente des Skelettmodells auslesen und ändern kann,

wobei die Recheneinheit ferner dazu ausgebildet ist, nach dem Bestimmen der das Objekt repräsentierenden 3D-Punktwolke folgende Schritte durchzuführen:

a. Zufälliges Auswählen eines Datenpunktes $X$ der 3D-Punktwolke;

b. Berechnen des Höhenfußpunktes $P$ zu $X$ bezüglich jedes Topologie-Elementes und Bestimmen, ob $P$ jeweils innerhalb des Topologie-Elementes liegt;

c. Berechnen des Abstandes von $X$ zu jedem Topologie-Element als Norm des Differenzvektors $X$ - $P$;

d. Bestimmen jenes Topologie-Elementes, das den minimalen Abstand zu $X$ aufweist, aus allen Topologie-Elementen, bei denen der Höhenfußpunkt $P$ innerhalb des Topologie-Elements liegt;

e. Verschieben des in Schritt d bestimmten Topologie-Elementes durch Verschieben aller das Topologie-Element festlegenden Knoten in Richtung des Vektors $X$ - $P$, wobei der Verschiebungsvektor für einen Knoten mit einer Lernrate und, falls das Topologie-Element eine Kante oder ein Dreieck ist, mit einem Gewicht, das sich aus dem Abstand des Knotens zum Höhenfußpunkt $P$ zu $X$ bezüglich des in Schritt d bestimmten Topologie-Elementes ergibt, multipliziert wird und

f. Wiederholen der Schritte a bis e für eine vorgegebene Anzahl von Lernschritten unter schrittweisem Verringern der Lernrate;

g. Aktualisieren der Knotenkoordinaten in der Tabelle des elektronischen Datenspeichers nach K-maligem Durchlaufen der vorbestimmten Anzahl von Lernschritten mit K $\geq$ 1;

h. Bereitstellen wenigstens der in der Tabelle aktualisierten Knotenkoordinaten zur weiteren Verarbeitung.

**8.** Computer-lesbares Speichermedium, das Befehle speichert, die, wenn sie von einer Recheneinheit ausgeführt werden, die Recheneinheit dazu veranlassen, das Verfahren nach einem der Patentansprüche 1 bis 6 durchzuführen.

## Claims

**1.** A method for pose estimation of a moving object by computer calculation of displacements of the 3D position coordinates of the nodes of a skeleton model, that is continuously fitted into a sequence of 3D point clouds, the node coordinates being present in table form in an electronic memory and the 3D point clouds being determined from electronically recorded images of a depth sensor camera that represent the moving object,

the skeleton model being a topology that exhibits as topology elements $N_1$ nodes, $N_2$ edges, and $N_3$ triangles having $N_1$, $N_2 > 0$ and $N_3 \geq 0$, and each topology element being described by nodes, node pairs, or node triplets and being firmly assigned to a part of the moving object, and wherein an arithmetic unit carries out the following steps:

a. randomly selecting a data point $X$ of the 3D point cloud;

b. calculating the crossing point $P$ relative to $X$ with reference to each topology element and identifying whether $P$ lies in each case inside the topology element;

c. calculating the distance from $X$ to each topology element as the norm of the differential vector $X$ - $P$;

d. determining that topology element that exhibits the minimum distance from $X$ among all topology elements whose crossing point $P$ lies inside the topology element;

e. displacing the topology element determined in step d by displacing all nodes establishing the topology element in the direction of the vector $X$ - $P$, wherein the displacement vector for a node is multiplied by a learning rate and, in case the topology element is an edge or triangle, by a weight that results from the crossing point $P$ relative to $X$ with reference to the topology element determined in step d, and

f. repeating the steps a to e for a predetermined number of learning steps while gradually reducing the learning rate;

g. updating the node coordinates in the table of the electronic memory after K passes of the predetermined number of learning steps with K $\geq$ 1;

h. providing at least the node coordinates updated in the table for further processing.

**2.** The method according to claim 1, wherein in step b the crossing point $P$ with reference to a topology element is represented as a linear combination of the node coordinate vectors establishing the topology element and it is determined from the representation coefficients whether $P$ lies inside the topology element.

**3.** The method according to claim 1 or 2, wherein the weight in step e is calculated from the representation coefficients of $P$.

**4.** The method according to one of claims 1 to 3, the number of repetitions of the steps a to e being between 1,000 and 5,000, in particular between 2,000 and 3,000.

5. The method according to one of claims 1 to 4, the learning rate being between the starting value 0.5 and the end value 0.01.

6. The method according to one of claims 1 to 5, further comprising the steps of generating control commands for an apparatus to be controlled on the basis of information from the table of the updated node coordinates and of controlling the apparatus to be controlled by means of the control commands.

7. An apparatus for pose estimation of a moving object, comprising:

a depth sensor camera for detecting electronic images of the moving object,
an electronic memory for storing the electronic images of the depth sensor camera, and
an arithmetic unit that is designed to determine a 3D point cloud representing the object from the electronic images temporally in step with the image recording by the camera, and
wherein the memory further stores a list of 3D coordinates for the nodes of a skeleton model, wherein the skeleton model is a topology which exhibits as topology elements $N_1$ nodes, $N_2$ edges, and $N_3$ triangles, and the arithmetic unit
being able to read out and change these coordinates for individual nodes,
predetermined node pairs, and predetermined node triplets as representation of the topology elements of the skeleton model,
wherein the arithmetic unit is further designed, after determining the 3D point cloud representing the object, to carry out the following steps:

a. randomly selecting a data point $X$ of the 3D point cloud;
b. calculating the crossing point $P$ relative to $X$ with reference to each topology element and identifying whether $P$ lies in each case inside the topology element;
c. calculating the distance from $X$ to each topology element as the norm of the differential vector $X - P$;
d. determining that topology element that exhibits the minimum distance from $X$ among all topology elements where the crossing point $P$ lies within the topology element;
e. displacing the topology element determined in step d by displacing all nodes establishing the topology element in the direction of the vector $X - P$, wherein the displacement vector for a node is multiplied by a learning rate and in case the topology element is an edge or triangle, by a weight that results from the crossing point $P$ relative to $X$ with reference to the topology element determined in step d, and
f. repeating the steps a to e for a predetermined number of learning steps while gradually reducing the learning rate;
g. updating the node coordinates in the table of the electronic memory after K passes of the predetermined number of learning steps with K $\geq$ 1;
h. providing at least the node coordinates updated in the table for further processing.

8. A computer-readable storage medium that stores commands that, once executed by an arithmetic unit, cause the arithmetic unit to carry out the method according to one of claims 1 to 6.

**Revendications**

1. Procédé d'estimation d'une pose d'un objet en mouvement au moyen d'un calcul informatique de décalages des coordonnées de position 3D des noeuds d'un modèle de squelette qui est ajusté de façon continue dans une séquence à partir de nuages de points 3D, dans lequel les coordonnées des noeuds sont disponibles sous forme de tableau dans une mémoire de données électronique et les nuages de points 3D sont déterminés à partir d'images enregistrées électroniquement d'une caméra à capteur de profondeur qui représentent l'objet en mouvement, dans lequel le modèle de squelette est une topologie qui présente en tant qu'éléments de topologie des noeuds $N_1$, des arêtes $N_2$ et des triangles $N_3$, où $N_1$, $N_2 > 0$ et $N_3 \geq 0$, et chaque élément de topologie est décrit au moyen de noeuds, de couples de noeuds ou de triplets de noeuds et attribué de façon fixe à une partie de l'objet en mouvement, et dans lequel une unité de calcul exécute les étapes suivantes :

a. sélectionner de façon aléatoire un point de données X du nuage de points 3D;

b. calculer le point de base de la hauteur P relatif à X par rapport à chaque élément de topologie et analyser si P se situe à chaque fois à l'intérieur de l'élément de topologie ;

c. calculer la distance de X par rapport à chaque élément de topologie en tant que norme du vecteur de différence X - P ;

d. déterminer l'élément de topologie qui présente la distance minimale par rapport à X parmi tous les éléments de topologie dont le point de base de la hauteur P se situe à l'intérieur de l'élément de topologie ;

e. décaler l'élément de topologie déterminé à l'étape d en décalant tous les noeuds définissant l'élément de topologie dans la direction du vecteur X - P, le vecteur de décalage pour un noeud étant multiplié par un taux d'apprentissage et, si l'élément de topologie est une arête ou un triangle, par un poids qui résulte de la distance du noeud par rapport au point de base de la hauteur P relatif à X par rapport à l'élément de topologie déterminé à l'étape d ; et

f. répéter les étapes a à e pour un nombre prédéfini d'étapes d'apprentissage avec une diminution progressive du taux d'apprentissage ;

g. actualiser les coordonnées du noeud dans le tableau de la mémoire de données électronique de K ≥ 1 après K fois le passage du nombre prédéterminé d'étapes d'apprentissage ;

h. fournir au moins les coordonnées du noeud actualisées dans le tableau pour un traitement complémentaire.

2. Procédé selon la revendication 1, dans lequel à l'étape b, le point de base de la hauteur P par rapport à un élément de topologie est représenté comme une combinaison linéaire des vecteurs de coordonnées de noeuds définissant l'élément de topologie et on détermine à partir des coefficients de représentation si P se situe à l'intérieur de l'élément de topologie.

3. Procédé selon la revendication 1 ou 2, dans lequel à l'étape e, le poids est calculé à partir des coefficients de représentation de P.

4. Procédé selon l'une des revendications 1 à 3, dans lequel le nombre de répétitions des étapes a à e est compris entre 1000 et 5000, en particulier entre 2000 et 3000.

5. Procédé selon l'une des revendications 1 à 4, dans lequel le taux d'apprentissage se situe entre la valeur de début 0,5 et la valeur de fin 0,01.

6. Procédé selon l'une des revendications 1 à 5, comprenant en outre les étapes consistant à générer des instructions de commande pour un dispositif à commander sur la base d'informations du tableau des coordonnées de noeuds actualisées et à commander le dispositif à commander au moyen des instructions de commande.

7. Dispositif d'estimation de pose d'un objet en mouvement comprenant :

- une caméra à capteur de profondeur pour saisir des images électroniques de l'objet en mouvement,
- une mémoire de données électronique pour stocker les images électroniques de la caméra à capteur de profondeur, et
- une unité de calcul qui est réalisée de façon à déterminer un nuage de poids 3D représentant l'objet à partir des images électroniques en gardant le rythme dans le temps avec l'enregistrement d'images par la caméra, et dans lequel la mémoire de données stocke en outre une liste de coordonnées 3D pour les noeuds d'un modèle de squelette, le modèle de squelette étant une topologie qui présente en tant qu'éléments de topologie des noeuds $N_1$, des arêtes $N_2$ et des triangles $N_3$, où $N_1$, $N_2 > 0$ et $N_3 \geq 0$, et l'unité de calcul pouvant lire et modifier ces coordonnées pour des noeuds individuels, des couples de noeuds prédéterminés et des triplets de noeuds prédéterminés en tant que représentation des éléments de topologie du modèle de squelette, l'unité de calcul étant en outre réalisée de façon à exécuter, après la détermination du nuage de poids 3D représentant l'objet, les étapes suivantes :

a. sélectionner de façon aléatoire un point de données X du nuage de points 3D ;

b. calculer le point de base de la hauteur P relatif à X par rapport à chaque élément de topologie et déterminer si P se situe à chaque fois à l'intérieur de l'élément de topologie ;

c. calculer la distance de X par rapport à chaque élément de topologie en tant que norme du vecteur de différence X - P ;

d. déterminer l'élément de topologie qui présente la distance minimale par rapport à X parmi tous les éléments de topologie dont le point de base de la hauteur P se situe à l'intérieur de l'élément de topologie ;

e. décaler l'élément de topologie déterminé à l'étape d en décalant tous les noeuds définissant l'élément de topologie dans la direction du vecteur X - P, le vecteur de décalage pour un noeud étant multiplié par un taux d'apprentissage et, si l'élément de topologie est une arête ou un triangle, par un poids qui résulte de la distance du noeud par rapport au point de base de la hauteur P relatif à X par rapport à l'élément de topologie déterminé à l'étape d ; et

f. répéter les étapes a à e pour un nombre prédéfini d'étapes d'apprentissage avec une diminution progressive du taux d'apprentissage ;

g. actualiser les coordonnées du noeud dans le tableau de la mémoire de données électronique de $K \geq 1$ après K fois le passage du nombre prédéterminé d'étapes d'apprentissage ;

h. fournir au moins les coordonnées du noeud actualisées dans le tableau pour un traitement complémentaire.

8. Support d'enregistrement lisible par un ordinateur qui stocke des instructions qui, lorsqu'elles sont exécutées par une unité de calcul, agissent sur l'unité de calcul de façon à ce qu'elle applique le procédé selon l'une des revendications 1 à 6.

a)                              b)                              c)

**Fig. 1**

a)

b)

c)

**Fig. 2**

a)

b)

**Fig. 3**

Fig. 4

## IN DER BESCHREIBUNG AUFGEFÜHRTE DOKUMENTE

### In der Beschreibung aufgeführte Patentdokumente

- US 5715166 A

- WO 2010130245 A1

### In der Beschreibung aufgeführte Nicht-Patentliteratur

- **DAVID SIMON et al.** Real-time 3-D Pose Estimation Using a High-Speed Range Sensor. *Proceedings of the IEEE International Conference on Robotics and Automation,* 1994

- **GREG TURK et al.** Zippered polygon meshes from range images. *Proceedings of the 21st annual conference on Computer graphics and interactive techniques,* 1994